# EUROPEAN PATENT APPLICATION

(11) **EP 3 962 053 A1**
(43) Date of publication of application: **02.03.2022**
(21) Application number: 20795175.7
(22) Date of filing: 16.04.2020
(51) Int. Cl.: H04M 9/00, G08B 25/04

(54) **INTERCOM SYSTEM, SETTING METHOD, AND PROGRAM**

(30) Priority: 22.04.2019 JP 2019081317; 22.04.2019 JP 2019081316
(71) Applicant: Panasonic Intellectual Property Management Co., Ltd., Osaka-shi, Osaka 540-6207 (JP)
(72) Inventor: HASHIMOTO, Takanori, Chuo-ku, Osaka-shi, Osaka 540-6207 (JP); NAGAI, Shoji, Chuo-ku, Osaka-shi, Osaka 540-6207 (JP)
(74) Representative: Müller-Boré & Partner Patentanwälte PartG mbB
(86) International application number: PCT/JP2020/016701
(87) International publication number: WO 2020/218146

(57) **Abstract**

An object of the present disclosure is to improve the degree of freedom of an aspect of response to a visitor. An intercom system (100) includes a response control unit (7). The response control unit (7) is configured to control pieces of response information. The pieces of response information are pieces of information which an outdoor station (1) outputs to respond to a visitor. The outdoor station (1) is an apparatus which is configured to communicate with any one of a plurality of indoor stations (2). The response control unit (7) is configured to, when receiving a setting input for setting the pieces of response information, set an aspect of voice information of the pieces of response information in accordance with the setting input. The voice information is to be output as a voice from the outdoor station (2).

## Description

### Technical Field

The present disclosure generally relates to intercom systems, setting methods, and programs. Specifically, the present disclosure relates to an intercom system in which an outdoor station calls an indoor station designated as a call destination, and a setting method and a program for the intercom system.

### Background Art

Patent Literature 1 describes an intercom system. The intercom system includes: an outdoor station equipped with a camera and installed at the main entrance of a single-family dwelling house or at the common area (lobby) of a multi-family dwelling house; and an indoor station installed inside the single-family dwelling house or a dwelling unit of the multi-family dwelling house to allow the resident of the house or the dwelling unit to speak with a caller over the outdoor station.

The intercom system described in Patent Literature 1 synthesizes an introduction image and a real-time image together to obtain a synthesized image and then makes a monitor of the indoor station display the synthesized image. The introduction image is a short-time image of a visitor captured by an image capture device of the outdoor station when the visitor gives a call operation to the outdoor station. The real-time image is an image of the visitor captured by the image capture device after the call operation is given by the visitor.

### Citation List

### Patent Literature

Patent Literature 1: JP 2012-15974 A

### Summary of Invention

It is an object of the present disclosure to provide an intercom system, a setting method, and a program with an increased degree of freedom of the aspect of response to a visitor.

An intercom system according to one aspect of the present disclosure includes a response control unit. The response control unit is configured to control pieces of response information. The pieces of response information are pieces of information which an outdoor station outputs to respond to a visitor who visits a complex facility including a plurality of facilities. The outdoor station is an apparatus which is provided to the complex facility and which is configured to communicate with any one of a plurality of indoor stations each of which is provided to a corresponding one of the plurality of facilities. The response control unit is configured to, when receiving a setting input for setting the pieces of response information, set an aspect of voice information of the pieces of response information in accordance with the setting input. The voice information is to be output as a voice from the outdoor station.

A setting method according to one aspect of the present disclosure includes an input step and a setting step. The input step is a step of receiving a setting input for setting pieces of response information. The setting step is a step of, in accordance with the setting input received in the input step, setting an aspect of voice information of the pieces of response information. The voice information is to be output as a voice from an outdoor station. The pieces of response information are pieces of information which the outdoor station outputs to respond to a visitor who visits a complex facility including a plurality of facilities. The outdoor station is an apparatus which is provided to the complex facility and which is configured to communicate with any one of a plurality of indoor stations each of which is provided to a corresponding one of the plurality of facilities.

A program according to one aspect of the present disclosure is configured to cause one or more processors to execute the setting method.

### Brief Description of Drawings

FIG. 1 is a block diagram illustrating a configuration for an intercom system according to an exemplary embodiment of the present disclosure;
FIG. 2 is a schematic diagram of an example of a multi-family dwelling house to which the intercom system is applied;
FIGS. 3A and 3B are each a conceptual view of a guidance image to be displayed on a monitor of an outdoor station of the intercom system;
FIGS. 4A to 4C are each a conceptual view of a guidance image to be displayed on the monitor of the outdoor station of the intercom system;
FIGS. 5A and 5B are each a conceptual view of a guidance image to be displayed on the monitor of the outdoor station of the intercom system;

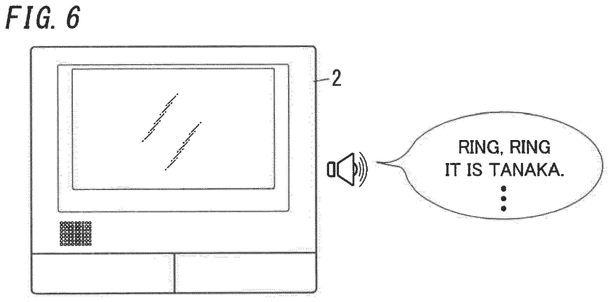

FIG. 6 is a conceptual view of an indoor station of the intercom system, where the indoor station is being called;
FIG. 7 is a conceptual view of one example of pieces of response information set by a response control unit of the intercom system;
FIG. 8 is a conceptual view of one example of the pieces of response information set by the response control unit of the intercom system;
FIG. 9 is a conceptual view of one example of the pieces of response information set by the response control unit of the intercom system;
FIG. 10 is a flowchart of operation of a setting function by the response control unit of the intercom system; and
FIG. 11 is a schematic view of an example of an arrangement of response control units of the intercom system in the case of a plurality of multi-family dwelling houses.

### Description of Embodiments

### (1) Overview

Figures which will be described in the following embodiment are schematic views, and the ratio of sizes and the ratio of thicknesses of components in the figures do not necessarily reflect actual dimensional ratios.

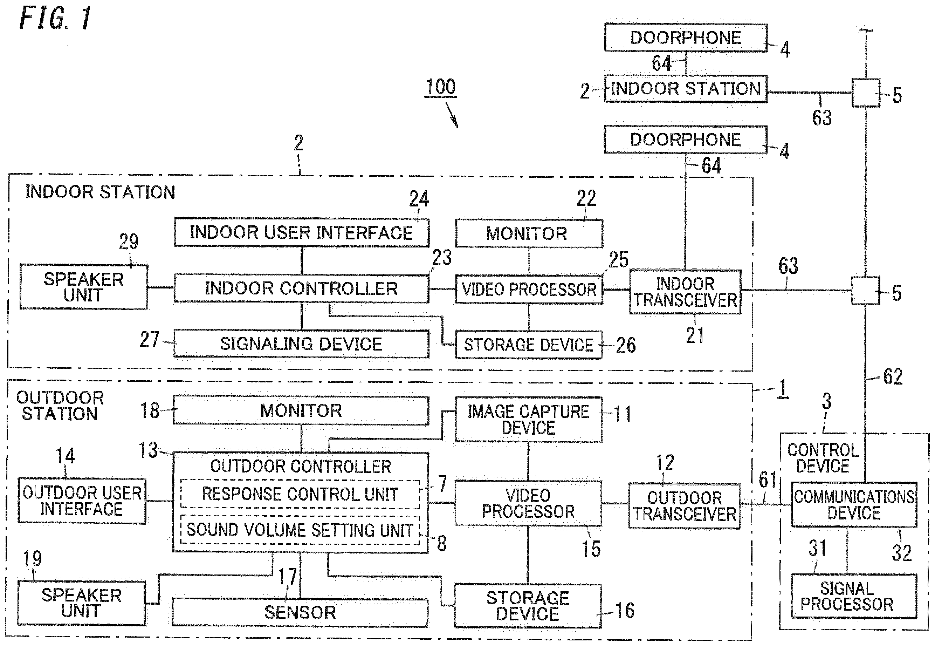

An intercom system 100 according to this embodiment may be used, for example, in a multi-family dwelling house such as a condominium. In the intercom system 100, an outdoor station 1 and respective indoor stations 2 communicate with each other via a control device 3 as shown in FIG. 1.

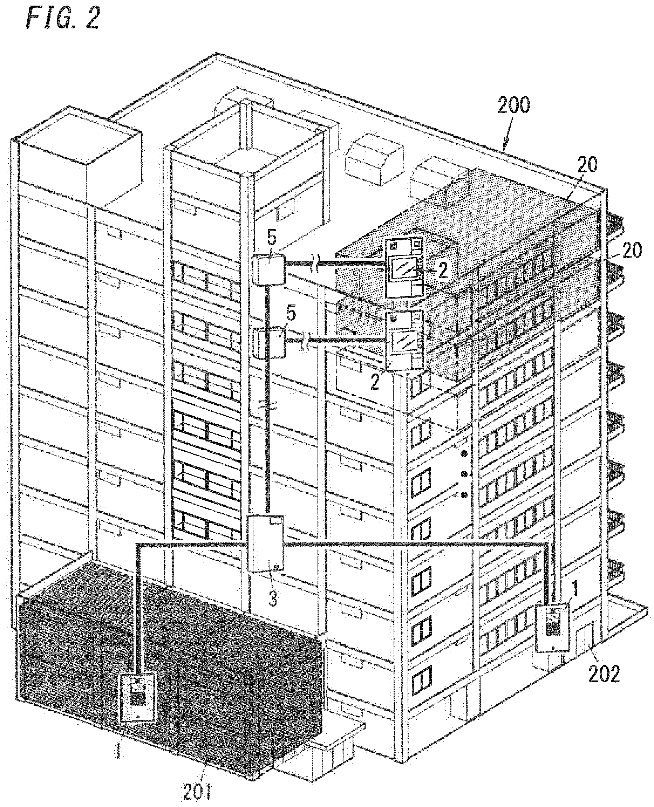

Here, the intercom system 100 according to the present embodiment may also find applications in non-dwelling facilities such as hospitals, schools, nursing-care facilities, and commercial buildings other than multi-family dwelling houses. That is, the intercom system 100 is applicable to a complex facility 200 (see FIG. 2) including a plurality of facilities 20. In the present embodiment, the intercom system 100 is applied to a multi-family dwelling house (complex facility) 200. That is, in the present embodiment, a plurality of dwelling units 20 included in the multi-family dwelling house 200 correspond to the plurality of facilities 20.

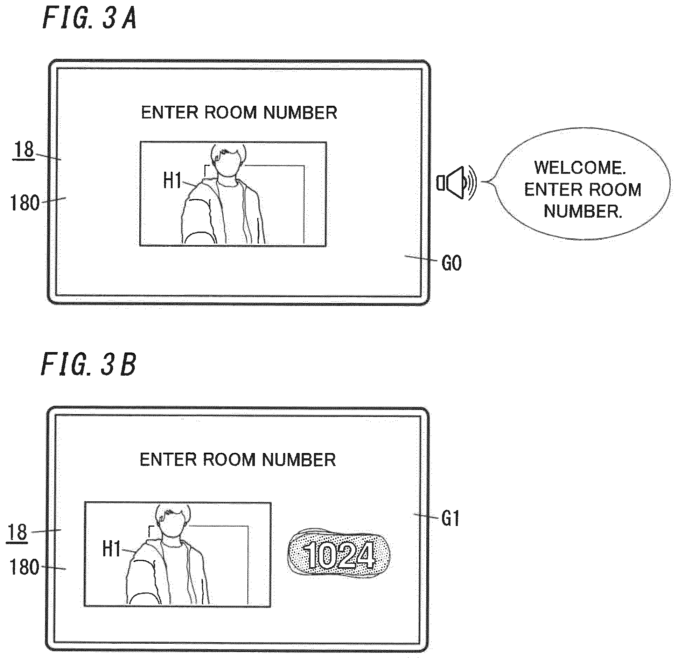

The intercom system 100 includes a response control unit 7. The response control unit 7 controls pieces of response information. The pieces of response information are pieces of information which the outdoor station 1 outputs to respond to (deal with) a visitor HI (see FIG. 3A) who visits the multi-family dwelling house (complex facility) 200 including the plurality of dwelling units (facilities) 20. The outdoor station 1 is an apparatus which is provided to the multi-family dwelling house 200 (see FIG. 2) and which is configured to communicate with any one of the plurality of indoor stations 2 each of which is provided to a corresponding one of the plurality of dwelling units 20. The outdoor station 1 may be, for example, a common terminal (i.e., a lobby intercom) installed in a common area 201, such as a lobby, of the multi-family dwelling house 200. The outdoor station 1 may be configured to communicate with (such as accept speaking and transmitting a video signal) indoor stations 2 over a number of multi-family dwelling houses, for example.

The pieces of response information may include, for example, an image or a voice message. The image is to be displayed on a monitor 18 (which will be described later) of the outdoor station 1 so as to be presented to the visitor HI. The voice message is to be output to the visitor HI from a loudspeaker included in a speaker unit 19 (which will be described later) of the outdoor station 1. The "response information" as used in the present disclosure is an image, a voice message, or the like which the outdoor station 1 outputs by itself. Thus, the pieces of response information include neither an image which is obtained by capturing an image of a resident (responding person) of the dwelling unit 20 and which is output by the outdoor station 1 in real time or a voice message of the resident nor a voice message recorded for each dwelling unit 20. That is, the pieces of response information are not pieces of information for responding to the visitor HI by a resident (responding person) of each dwelling unit (facility) 20. Rather, the pieces of response information correspond to, so to speak, pieces of information for responding to (deal with) the visitor H1 instead of a representative (e.g., caretaker of the multi-family dwelling house 200) of the multi-family dwelling house (complex facility) 200.

The "visitor" as used in the present disclosure refers to a person visiting any one dwelling unit (facility) 20 of the multi-family dwelling house (complex facility) 200. Examples of the visitor include a resident himself/herself in addition to family members and acquaintances such as friends of the resident of the dwelling unit 20 and a third party. That is, when the visitor HI is a person other than the resident, the visitor HI is a person who came to the dwelling unit 20 with some purposes to visit the resident. In contrast, when the visitor H1 is a resident, the visitor HI is a person who comes to the dwelling unit 20 to return to home, that is, the dwelling unit 20.

When receiving a setting input for setting the pieces of response information, the response control unit 7 sets, in accordance with the setting input, the pieces of response information with the outdoor station 1 being regarded as one unit or with the multi-family dwelling house (complex facility) 200 being regarded as one unit. The setting input is performed by, for example, a builder or a caretaker of the outdoor station 1. Here, "setting the pieces of response information with the outdoor station 1 being regarded as one unit" means that, for example, when a plurality of outdoor stations 1 are provided, different pieces of response information are set for the respective outdoor stations 1. Moreover, "setting the pieces of response information with the multi-family dwelling house 200 being regarded as one unit" means that, for example, when a plurality of outdoor stations 1 are provided, the same pieces of response information are set for the plurality of outdoor stations 1. In this case, the pieces of response information are set in any one outdoor station 1 of the plurality of outdoor stations 1, and then transmitting the set pieces of response information via the control device 3 from the outdoor station 1 to another outdoor station 1 enables the same pieces of response information to be set in the another outdoor station 1.

As described above, in the present embodiment, for example, the builder or the caretaker of the outdoor station 1 may freely set, by the response control unit 7, the pieces of response information with the outdoor station 1 being regarded as one unit or with the multi-family dwelling house (complex facility) 200 being regarded as one unit. Thus, the present embodiment has the advantage that the degree of freedom of the aspect of response to the visitor HI can be improved.

In the present embodiment, when receiving the setting input, the response control unit 7 may set the aspect of voice information of the pieces of response information in accordance with the setting input. The voice information is to be output as a voice from the outdoor station 1. The "aspect of voice information" as used in the present disclosure means universal features of voice information independent of the contents of the voice information, but not the contents of voice information (voice message) to be output from the outdoor station 1. For example, when the aspect of voice information is a voice tone, the response control unit 7 may set, in accordance with the setting input, whether a voice message saying, for example, "Welcome" is output from the outdoor station 1 in a male voice tone or in a female voice tone.

As described above, in the present embodiment, for example, the builder or the caretaker of the outdoor station 1, or a resident in the dwelling unit 20 may freely set, by the response control unit 7, the aspect of voice information of the pieces of response information. Thus, the present embodiment has the advantage that the degree of freedom of the aspect of response to the visitor HI can be improved.

### (2) Details

The intercom system 100 according to the present embodiment will be described in detail below.

### (2.1) Overall Structure

As shown in FIGS. 1 and 2, the intercom system 100 according to the present embodiment includes a plurality of (in FIG. 2, two) outdoor stations 1, a plurality of (in FIG. 1, two) indoor stations 2, and a control device 3. The intercom system 100 further includes a plurality of (in FIG. 1, two) doorphones 4 and a plurality of (in FIG. 1, two) splitters 5.

As shown in FIG. 2, in the present embodiment, one door station 1 of the two outdoor stations 1 is a common terminal (lobby intercom) installed in the common area (lobby) 201 of the multi-family dwelling house 200. Moreover, the other outdoor station 1 of the two outdoor stations 1 is a dedicated terminal which is installed at a back entrance 202, a parking lot, or the like of the multi-family dwelling house 200 and which is provided for residents of the multi-family dwelling house 200. The following description is given focusing on the outdoor station 1 as the common terminal unless otherwise indicated.

The indoor station 2 is, for example, a dwelling unit terminal installed in each dwelling unit 20 of the multi-family dwelling house 200 as shown in FIG. 2. Each indoor station 2 is configured to communicate with (such as enabling speaking to the visitor H1 and receiving a video signal) the outdoor station 1. The indoor station 2 may also be installed in a caretaker's room or a multi-purpose room of the multi-family dwelling house 200. Examples of the multi-purpose rooms include a meeting room, a guest room, a kids' room, and a party room which are facilities in a common area of the multi-family dwelling house 200. That is, the plurality of indoor stations 2 are at least provided to the respective facilities 20 of the multi-family dwelling house 200.

The control device 3 is configured to perform calling control and relay signals between the outdoor station 1 and the indoor stations 2. The control device 3 may be installed, for example, in the caretaker's room. The control device 3 relays, when the visitor H1 attempts to call any of the indoor stations 2 using the outdoor station 1, signals to be transmitted and received between the outdoor station 1 and the indoor station 2.

Each doorphone 4 may be installed, for example, at the outdoor entrance of an associated dwelling unit 20 of the multi-family dwelling house 200. The plurality of doorphones 4 correspond one-to-one to the plurality of indoor stations 2. Each doorphone 4 is configured to communicate with (such as enabling speaking or transmitting a video signal) an associated indoor station 2. Note that no doorphone 4 may be connected to the indoor station 2 installed in a multi-purpose room, for example.

The outdoor station 1 is connected to the control device 3 via a first main line 61. Each of the plurality of splitters 5 is inserted in a second main line 62 such that the plurality of indoor stations 2 are connectable to the second main line 62. In this embodiment, the second main line 62 branches into a plurality of branch lines 63, and the plurality of splitters 5 are provided at respective branching points of the plurality of branch lines 63 of the second main line 62. This allows each indoor station 2 to be connected to the second main line 62 via an associated splitter 5.

Each indoor station 2 is also connected to the control device 3 via the second main line 62, the associated branch line 63, and the associated splitter 5. Each doorphone 4 is connected to an associated indoor station 2 via a connection line 64. Each of the first main line 61, second main line 62, branch lines 63, and connection lines 64 may be implemented as a twisted pair cable, for example.

### (2.2) Outdoor Station

Next, a configuration for the outdoor station 1 will be described. The outdoor station 1 includes an image capture device 11, an outdoor transceiver 12, an outdoor controller 13, an outdoor user interface 14, a video processor 15, a storage device 16, a sensor 17, and a monitor 18 as shown in FIG. 1. The outdoor station 1 further includes a speaker unit 19 (including a loudspeaker and a microphone) that allows the visitor HI to speak to his or her desired person who is operating the indoor station 2.

The image capture device 11 is a camera including an image sensor for capturing an image of a subject. In this example, the subject is supposed to be a visitor HI. In this embodiment, the image capturing area (field of view) of the image capture device 11 is set in front of the outdoor station 1 so as to capture an image of at least the face of the visitor H1 who is operating the outdoor station 1. In this embodiment, the image capture device 11 is a camera for shooting a moving picture. Furthermore, in this embodiment, the image capture device 11 is a camera for capturing a color image.

The image sensor is, for example, a two-dimensional image sensor such a Charge Coupled Device (CCD) image sensor or a complementary Metal-Oxide Semiconductor (CMOS) image sensor. The image capture device 11 has an incoming light beam, coming from the subject, incident on, and imaged through an optical system such as a lens on, an image capturing plane (photosensitive plane) of the image sensor and makes the image sensor convert the incident light into an electrical signal. Then, the image capture device 11 supplies an output signal of the image sensor as a video signal to the video processor 15.

The outdoor transceiver 12 is a communications interface for communicating with an indoor station 2. The outdoor transceiver 12 is connected to the control device 3 via the first main line 61. In the present embodiment, the first main line 61 includes a plurality of lines, but in FIG. 1, the first main line 61 is indicated by a single line. The outdoor transceiver 12 is configured to communicate bidirectionally with the indoor station 2 via a communications device 32 of the control device 3. The outdoor transceiver 12 is configured to transmit a communications signal to the indoor station 2. Examples of the communications signals include an audio signal, a video signal, and a control signal. The outdoor transceiver 12 also receives a communications signal from the indoor station 2 via the communications device 32 and demodulates the communications signal thus received, thereby acquiring an audio signal or any other signal. The audio signal is output to the speaker unit 19 via the outdoor controller 13.

The outdoor user interface 14 is configured to accept an operation given by a person (visitor HI). The outdoor user interface 14 is, for example, an input interface having a plurality of press buttons, a touch panel, and the like. The plurality of press buttons include ten keys of 0 through 9, an asterisk (*) key, a Delete key, a Call button, and the like. For example, if the visitor HI wants to call, using this outdoor station 1, a resident of room (dwelling unit) #1024, then he or she needs to press numeric keys as the ten keys one by one to enter the room number. The room number entered is sequentially displayed one digit after another on the monitor 18 every time one numeric key is pressed down (see FIG. 3B). Finally, the visitor H1 presses the Call button to confirm the room number entered, thereby calling the indoor station 2 of the dwelling unit of room #1024.

The video processor 15 is configured to receive a video signal from the image capture device 11 and process, by signal processing, video represented by the video signal. The video processor 15 is constituted by, for example, a device such as a Digital Signal Processor (DSP) or a Field-Programmable Gate Array (FPGA).

The storage device 16 may be implemented as a memory on which both read and write operations are enabled. The storage device 16 may be a flash memory, for example. The storage device 16 stores (records) video captured by the image capture device 11. In this embodiment, the storage device 16 is provided outside of the outdoor controller 13. However, this is only an example and should not be construed as limiting. Alternatively, the storage device 16 may be provided inside of the outdoor controller 13. That is to say, the storage device 16 may be a built-in memory of the outdoor controller 13. Note that the storage 16 stores various types of data which will be described later in addition to the video captured by the image capture device 11.

The sensor 17 may be a pyroelectric infrared sensor, for example, and is configured to detect the presence of a person (visitor HI) or any other target by sensing a variation caused in the quantity of infrared radiation by any movement of the person or any other target. The sensor 17 is not an indispensable element and may be omitted.

The monitor 18 includes a monitor screen 180 implemented as, for example, an LCD panel. Under the control of the outdoor controller 13, the monitor 18 outputs (i.e., displays as images) a home guidance image G0 and first to sixth guidance images G1-G6 as shown in FIGS. 3A-5B. Note that these guidance images G0-G6 are only examples. The types, number, and contents of the guidance images are not particularly limited. Moreover, the monitor 18 is controlled by the outdoor controller 13 to display video of the visitor H1 himself/herself captured by the image capture device 11. The monitor 18 outputs, for example, a real-time video which is being captured by the image capture device 11 in a superimposed manner substantially on the center of the guidance image (see FIG. 3A). While the indoor station 2 designated as a call destination is being called, or while the visitor is speaking with the resident over the indoor station 2, the video of the visitor HI is not output to the monitor screen 180 but is output to the indoor station 2.

The outdoor controller 13 is a computer system including one or more processors and a memory as main hardware components. In the computer system, the functions of the outdoor controller 13 may be implemented by making the one or more processors execute a program stored in the memory. The program may be stored in the memory of the computer system in advance, may be provided via telecommunications network, or may be provided via a non-transitory recording medium such as a computer system-readable optical disc, or a hard disk drive storing the program.

The outdoor controller 13 is configured to control the image capture device 11 and the outdoor transceiver 12. The outdoor controller 13 is also configured to control the video processor 15 and the monitor 18 as well.

The outdoor controller 13 controls the image capture device 11 to make the image capture device 11 capture video. In the present embodiment, when the sensor 17 detects any person (a visitor HI), for example, the outdoor controller 13 activates the image capture device 11 to start capturing video of the person. The outdoor controller 13 controls the monitor 18 to have the real-time video being captured by the image capture device 11 superimposed on the guidance image presenting the room number entered and have such a synthetic image displayed on the monitor screen 180 (see FIG. 3A). Note that the image output from the monitor 18 to the monitor screen 180 may be an image other than the real-time video. For example, the image may be a still image, such as a still image when the visitor HI gives an operation to the outdoor user interface 14 for the first time, captured at any timing by the image capture device 11, or may be frame-by-frame moving images.

Moreover, before and while the indoor station 2 designated by the visitor HI is being called and while the outdoor station 1 and the indoor station 2 are communicating with each other, the outdoor controller 13 transmits video captured by the image capture device 11 to the indoor station 2. Specifically, the outdoor controller 13 controls such that first video is captured during a first image capturing time period. In addition, the outdoor controller 13 controls such that second video is captured during a second image capturing time period. The first image capturing time period is, for example, a time period from when the outdoor user interface 14 receives an operation given by the visitor H1 to when a call is started. The second image capturing time period is, for example, a time period from when transmission of the first video to the indoor station 2 ends to when speaking ends, or the call ends. The second video is so-called real-time video, and the first video is video captured prior to the second video.

The outdoor controller 13 controls the outdoor transceiver 12 to make the outdoor transceiver 12 transmit a communications signal to the indoor station 2 and receive a communications signal from the indoor station 2. Examples of the communications signals to the indoor station 2 include an audio signal, a video signal, and a control signal. Examples of the communications signals from the indoor station 2 include an audio signal and a control signal.

The outdoor controller 13 controls the video processor 15 to make the video processor 15 process the video represented by the video signal supplied from the image capture device 11. The video processed by the video processor 15 is transmitted from the outdoor transceiver 12 to the indoor station 2.

The outdoor controller 13 is configured to perform any of various functions in accordance with the operating command received via the outdoor user interface 14. Specifically, the outdoor controller 13 is configured to perform, in accordance with a guidance image being displayed on the monitor screen 180 of the monitor 18, a function corresponding to the guidance image. For example, on finding the numeric keys operated while a guidance image prompting the visitor HI to enter a room number is being displayed on the monitor screen 180, the outdoor controller 13 shows the entered numerals one by one on the monitor screen 180. When the Call button receives an operation after the room number is entered, the outdoor controller 13 starts calling the indoor station 2 designated as the call destination.

The outdoor controller 13 has a first recording function of starting first recording within a prescribed time period. In the following description, sound data acquired by the first recording is referred to as "first sound data". The first sound data may include voice emitted by the visitor HI and input to a microphone of the speaker unit 19. The first sound data may include, for example, the personal name or official position of the visitor H1. Moreover, when the visitor H1 is a deliverer or the like, the first sound data may include the name of a company, a group, or the like to which the visitor H1 belongs. The first sound data may further include a simple message (a reason for a visit).

The prescribed time period is a time period during which the indoor station 2 designated as the call destination is called based on a room number (or caretaker's room, or the like) specified by the outdoor user interface 14. In the present embodiment, the prescribed time period starts, for example, when the Call button for confirming the room number is pressed. Moreover, in the present embodiment, the prescribed time period ends at an end timing of the call when the indoor station 2 designated as the call destination does not answer. When the indoor station 2 designated as the call destination answers before the first recording is started, the outdoor controller 13 does not execute the first recording. When the indoor station 2 designated as the call destination answers during the first recording, the outdoor controller 13 interrupts the first recording. When the outdoor controller 13 starts the first recording, the outdoor controller 13 transitorily stores, in its built-in memory, the first sound data and transmits the first sound data to the indoor station 2.

Moreover, the outdoor controller 13 has a second recording function of, when the indoor station 2 designated as a call destination does not answer within a prescribed time period, starting second recording different from the first recording. In the following description, sound data acquired by the second recording is referred to as "second sound data". The second sound data, similarly to the first sound data, may include voice emitted by the visitor HI and input to the microphone of the speaker unit 19. Moreover, similarly to the first sound data, the second sound data may include the name or official position of the visitor HI, the name of a company or a group to which the visitor HI belongs, or a simple message (a reason for a visit).

The second recording is started only when the visitor HI presents his/her willingness to perform the second recording. Specifically, the second recording is started by the visitor HI pressing the Call button of the outdoor user interface 14 in a time period for allowing the visitor H1 to select whether or not the second recording is performed. In the present embodiment, the time period is a time period during which a fifth guidance image G5 which will be described later is displayed on the monitor screen 180 of the monitor 18. Note that if in the time period, the visitor HI presses the Delete key of the outdoor user interface 14, the second recording is not executed.

When the second recording is executed, the outdoor controller 13 stores the second sound data acquired by the second recording in the storage 16. In this case, at a timing at which the outdoor controller 13 stores the second sound data in the storage 16, the outdoor controller 13 preferably deletes the first sound data, which has been obtained by the first recording and which has been transitorily stored in the built-in memory. In contrast, if the second recording is not executed, the outdoor controller 13 stores, in the storage 16, the first sound data obtained through the first recording and transitorily stored in the built-in memory.

The sound data stored in the storage 16 is maintained as so-called recorded message data until prescribed days (e.g., one week) elapse and is deleted after the prescribed days elapse. Moreover, the recorded message data is transmitted also to the indoor station 2 and is stored in the indoor station 2 until the prescribed days (e.g., one week) elapse. A user (e.g., resident) gives to the indoor station 2 an operating command relating to deletion of the recorded message data, thereby deleting the recorded message data. Thus, even when the second recording is not executed, the first sound data obtained by the first recording is stored in the storage 16, and therefore, the first recording instead of the second recording may be performed as message recording.

Moreover, the outdoor controller 13 has a function as the response control unit 7 which controls an output of the response information to the outdoor station 1. The function, as the response control unit 7, of the outdoor controller 13 is hereinafter described with the response control unit 7, but not the outdoor controller 13, being defined as a subject unless otherwise indicated. In the present embodiment, the response control unit 7 outputs (displays), as the response information, the home guidance image G0 and the first guidance image G1 to the sixth guidance image G6 to (on) the monitor 18. Moreover, the response control unit 7 outputs, the response information, a voice message corresponding to at least one of the images G0 to G6 from the loudspeaker of the speaker unit 19.

As shown in FIG. 3A, the home guidance image G0 includes guidance information (e.g., character string of, for example, "Please enter a room number") for prompting a visitor to enter the room number. Moreover, onto the home guidance image G0, video of the visitor H1 himself/herself captured by the image capture device 11 is output. When the sensor 17 senses the visitor HI, the response control unit 7 activates the image capture device 11 and displays the home guidance image G0 on the monitor screen 180 of the monitor 18. Moreover, the response control unit 7 causes the loudspeaker of the speaker unit 19 to output, for example, a voice message saying, "Welcome. Please enter a room number".

As shown in FIG. 3B, the first guidance image G1 includes guidance information presented by the home guidance image G0 and numerical digits representing the room number entered by the visitor H1 via the outdoor user interface 14. When the visitor H1 starts entering a room number via the outdoor user interface 14 in accordance with the home guidance image G0, the response control unit 7 displays the first guidance image G1 on the monitor screen 180 of the monitor 18. The first guidance image G1 is renewed each time the numerical digit of the room number is input. At this time, the response control unit 7 may output a voice message corresponding to the numerical digit of the room number from the loudspeaker of the speaker unit 19 each time the visitor HI enters the numerical digit of the room number.

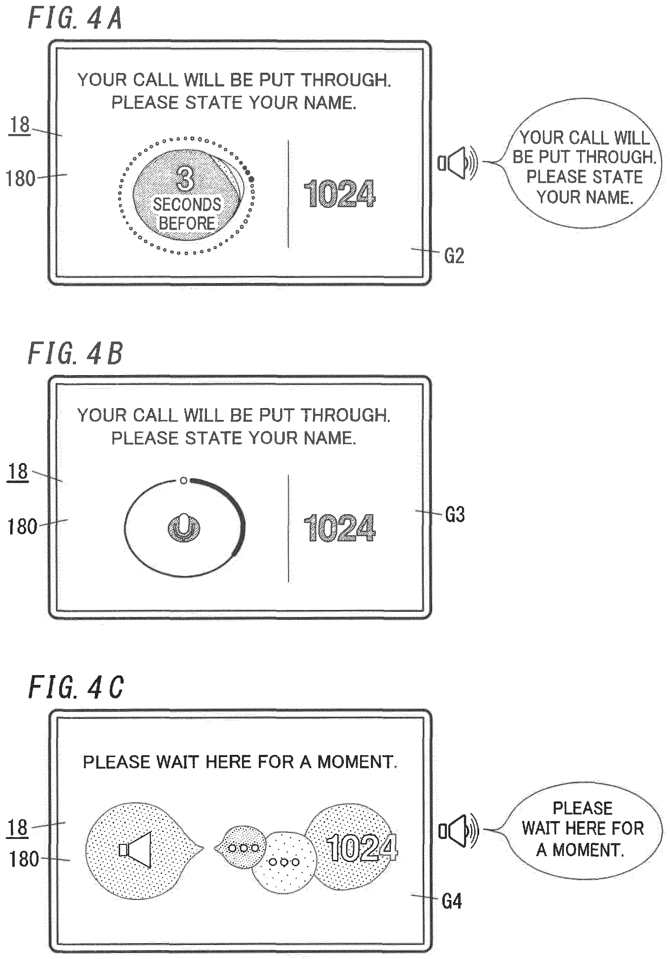

As shown in FIG. 4A, the second guidance image G2 includes guidance information, countdown information, or the like. The guidance information (e.g., character string of "Your call will be put through. Please state your name") prompts the visitor H1 to state his/her name. The countdown information represents a time until the first recording is started. FIG. 4A shows, for example, that a time until the first recording is started is three seconds. When the visitor HI presses the Call button of the outdoor user interface 14 to complete entry of the room number, the response control unit 7 displays the second guidance image G2 on the monitor screen 180 of the monitor 18. The second guidance image G2 is renewed each time the countdown advances by one second. Moreover, the response control unit 7 outputs, for example, a voice message saying "Your call will be put through. Please state your name" from the loudspeaker of the speaker unit 19.

As shown in FIG. 4B, the third guidance image G3 includes the guidance information displayed as the second guidance image G2 and a circular-shaped timer image representing a remaining time for the first recording while the first recording is being performed. When the countdown ends, the response control unit 7 displays the third guidance image G3 on the monitor screen 180 of the monitor 18. The timer image is renewed over time. Specifically, an arc-shaped strip in the timer image gradually extends as the time passes, and when the remaining time eventually reaches zero, a substantially circular shape is completed.

As shown in FIG. 4C, the fourth guidance image G4 includes guidance information informing the visitor HI of a situation that the call destination is being called (e.g., character string of, for example, "Please wait here for a moment"), pictographs visually showing that the call destination is being called, and the like. When the response control unit 7 ends the first recording, the response control unit 7 displays the fourth guidance image G4 on the monitor screen 180 of the monitor 18. Moreover, the response control unit 7 outputs a voice message saying, for example, "Please wait here for a moment" from the loudspeaker of the speaker unit 19.

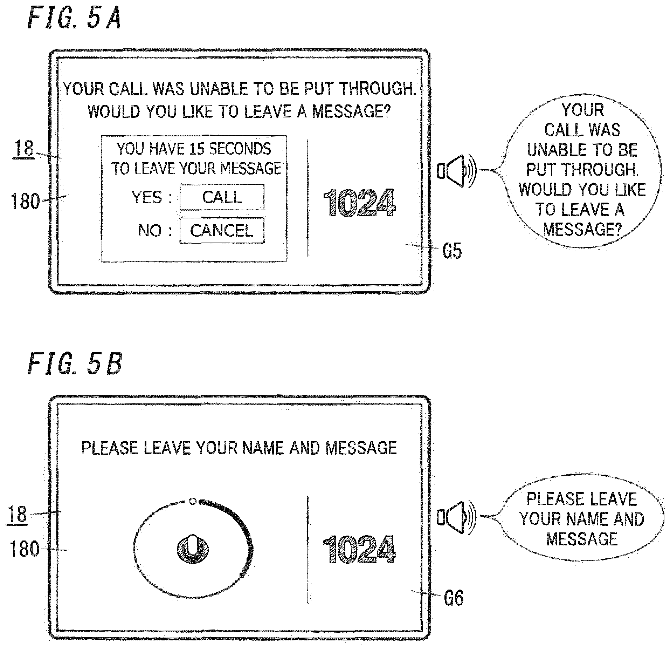

As shown in FIG. 5A, the fifth guidance image G5 includes guidance information (e.g., character string of for example, "Your call was unable to be put through. Would you like to leave a message?") to inform the visitor H1 of availability of leaving (i.e., second recording of) a message. The fifth guidance image G5 further includes guidance information for informing the visitor HI of the amount of time for the second recording (e.g., character string of, for example, "You have 15 seconds to leave your message"), and pieces of selection information (e.g., character strings of "Yes: Call" and "No: Cancel"). When the indoor station 2 designated as the call destination has not answered even at an end time of the call, the response control unit 7 displays the fifth guidance image G5 on the monitor screen 180 of the monitor 18. Moreover, the response control unit 7 outputs, for example, a voice message saying, for example, "Your call was unable to be put through. Would you like to leave a message?" from the loudspeaker of the speaker unit 19.

As shown in FIG. 5B, the sixth guidance image G6 includes guidance information for prompting the visitor H1 to speak his/her name and a message (e.g., character string of "Please leave your name and message") and a circular-shaped timer image representing a remaining time for the second recording while the second recording is being performed. When the visitor H1 presses the Call button of the outdoor user interface 14 while the fifth guidance image G5 is being displayed, the response control unit 7 displays the sixth guidance image G6 on the monitor screen 180 of the monitor 18. The timer image is renewed over time in a similar manner to the timer image of the third guidance image G3. Moreover, the response control unit 7 outputs a voice message saying, for example, "Please leave your name and message" from the loudspeaker of the speaker unit 19.

Here, if the visitor H1 presses the Cancel button or gives no press operation while the fifth guidance image is being displayed, the response control unit 7 does not execute the second recording but displays the home guidance image G0 on the monitor screen 180 of the monitor 18 and transitions to its standby state. Moreover, also when the second recording ends, the response control unit 7 displays the home guidance image G0 on the monitor screen 180 of the monitor 18 and transitions to the display standby state. When the sensor 17 no longer senses the visitor H1 in the standby state, the response control unit 7 stops operation of the image capture device 11 and also stops displaying the home guidance image G0.

Thus, the response control unit 7 sequentially outputs the images G0 to G6 and the voice messages as the pieces of response information as the response to the visitor HI advances. Note that when the indoor station 2 designated as the call destination answers a call from the outdoor station 1, the response control unit 7 displays neither the fifth guidance image G5 nor the sixth guidance image G6 on the monitor screen 180 of the monitor 18.

Moreover, the response control unit 7 has a call control function of controlling an output of call information to the indoor station 2 designated as the call destination by the visitor HI. The call information may include, for example, a call sound (e.g., "Ring, Ring") output from a loudspeaker included in a speaker unit 29 (which will be described later) of the indoor station 2. Moreover, the call information may include, for example, an image displayed on a monitor 22 (which will be described later) of the indoor station 2 and presented to a resident (responding person) of the dwelling unit 20, or a voice message output to the resident of the dwelling unit 20 from a loudspeaker included in the speaker unit 29 of the indoor station 2. In the present embodiment, the call information includes a call sound and a first sound data recorded by the first recording.

In the present embodiment, the visitor H1 completes entry of the room number via the outdoor user interface 14 and presses the Call button as described above, and thereby, confirming the room number (i.e., call destination). Thus, when the room number thus entered is confirmed, the response control unit 7 starts calling the resident by the indoor station 2 installed in a room (here, room #1024) designated as the call destination via the control device 3. When the response control unit 7 starts calling, a signaling device 27 (which will be described later) of the indoor station 2 outputs a call sound. While the resident is being called, the indoor station 2 regenerates the first voice data, which has been recorded by the first recording, for example, by streaming in real time. In sum, the response control unit 7 regenerates the first sound data by the indoor station 2 while the resident is being called. During a time period during which the first sound data is regenerated, outputting the call sound is preferably temporarily stopped. Hereafter, the indoor station 2 alternately repeats outputting of the call sound and regeneration of the first sound data until a prescribed time period of the first recording function ends. Note that the first sound data may be data stored in the indoor station 2 when the data is transmitted from the outdoor station 1 for the first time, or data stored in a memory of the outdoor controller 13 may be repeatedly transmitted to the indoor station 2.

### (2.3) Configuration of Indoor Station

Next, a configuration for the indoor stations 2 will be described. As shown in FIG. 1, each indoor station 2 includes an indoor transceiver 21, the monitor 22, an indoor controller 23, an indoor user interface 24, a video processor 25, a storage device 26, and the signaling device 27. The indoor station 2 further includes, for example, the speaker unit 29 (including a loudspeaker and a microphone) that enables the resident to speak to the visitor HI who is operating either the outdoor station 1 or a doorphone 4 associated with the indoor station 2.

The indoor transceiver 21 is a communications interface for communicating with the outdoor station 1 and the doorphone 4. Note that the indoor transceiver 21 may include two different communications interfaces, namely, a communications interface for communicating with the outdoor station 1 and a communications interface for communicating with the doorphone 4. The indoor transceiver 21 is connected to the control device 3 via the second main line 62, the branch line 63, and the splitter 5. In the present embodiment, the second main line 62 and the branch line 63 each include a plurality of lines, but in FIG. 1, the second main line 62 and the branch line 63 are each indicated by a single line. The indoor transceiver 21 is configured to communicate bidirectionally with the outdoor station 1 via the communications device 32 of the control device 3. The indoor transceiver 21 is configured to transmit a communications signal to the outdoor station 1. Examples of the communications signals include an audio signal and a control signal. The indoor transceiver 21 also receives a communications signal from the outdoor station 1 via the communications device 32 and demodulates the communications signal thus received, thereby acquiring an audio signal, a video signal, or any other signal. The audio signal is output to the speaker unit 29 via the indoor controller 23. The video signal is output to the monitor 22 via the indoor controller 23.

The monitor 22 is configured to display the video provided by the video processor 25 (such as the video captured by the image capture device 11 of the outdoor station 1). The monitor 22 may be implemented as an LCD, for example. If the indoor station 2 includes a touchscreen display, then the touchscreen display may serve as both the monitor 22 and the indoor user interface 24.

The indoor user interface 24 is configured to accept an operating command entered by a person (such as the resident of the dwelling unit). When a predetermined type of operation (such as a press operation) is performed on the indoor user interface 24 while the indoor transceiver 21 is receiving a call signal to call the resident, the visitor H1 and the resident are enabled to speak to each other over the outdoor station 1 and the indoor station 2.

The video processor 25 is configured to be supplied with the video signal received at the indoor transceiver 21 from the outdoor station 1 and process, by signal processing, the video represented by the video signal. For example, the video processor 25 may be configured to perform synthesis processing of synthesizing multiple video frames together. In the present embodiment, the video processor 25 synthesizes first video which is video captured in the past and second video which is real-time video together by the synthesis processing to obtain single video. The video processor 25 may be implemented as, for example, a device such as a DSP or an FPGA.

The indoor controller 23 is a computer system including one or more processors and a memory as main hardware components. In the computer system, the functions of the indoor controller 23 may be implemented by making the one or more processors execute a program stored in the memory. The program may be stored in the memory of the computer system in advance, may be provided via telecommunications network, or may be provided via a non-transitory recording medium such as a computer system-readable optical disc, or a hard disk drive storing the program.

The indoor controller 23 is configured to control the indoor transceiver 21 and the monitor 22. The indoor controller 23 is also configured to control the video processor 25 as well. The indoor controller 23 controls the indoor transceiver 21 to make the indoor transceiver 21 transmit a communications signal to the outdoor station 1 and receive a communications signal from the outdoor station 1. Examples of the communications signals to the outdoor station 1 include an audio signal and a control signal. Examples of the communications signals from the outdoor station 1 include an audio signal, a video signal, and a control signal.

The indoor controller 23 controls the monitor 22 to make the monitor 22 display the video transmitted from the outdoor station 1. In the present embodiment, the monitor 22 displays the single video obtained by synthesizing the first video which is video captured in the past and the second video which is real-time video together. For example, the indoor controller 23 displays the first video small and the second video largely on a monitor screen of the monitor 22.

The storage device 26 may be implemented as a memory on which both read and write operations are enabled. The storage device 26 may be a flash memory, for example. The storage device 26 stores the first video and the second video transmitted from the outdoor station 1. In this embodiment, the storage device 26 is provided outside of the indoor controller 23. However, this is only an example and should not be construed as limiting. Alternatively, the storage device 26 may be provided inside of the indoor controller 23. That is to say, the storage device 26 may be a built-in memory of the indoor controller 23.

The signaling device 27 is configured to emit a calling sound, for example. When called by the outdoor station 1, the indoor controller 23 makes the signaling device 27 emit a calling sound at a predetermined timing. In addition, the signaling device 27 is configured to output not only the call sound but also the first sound data recorded at the outdoor station 1. The first sound data may be output from the loudspeaker of the speaker unit 29. The first sound data is stored in a storage device 26 or the built-in memory.

### (2.4) Configuration of Control Device

Next, a configuration for the control device 3 will be described. The control device 3 includes a signal processor 31 and the communications device 32 as shown in FIG. 1.

The communications device 32 is a communications interface for communicating with the outdoor station 1 and the indoor stations 2. The communications device 32 is connected to the outdoor station 1 via the first main line 61. The communications device 32 is also connected to the indoor stations 2 via the second main line 62, the branch lines 63, and the splitters 5. The communications device 32 is configured to communicate bidirectionally with the outdoor transceiver 12 of the outdoor station 1. Likewise, the communications device 32 is also configured to communicate bidirectionally with the indoor transceivers 21 of the indoor stations 2. That is to say, the communications device 32 is configured to relay communications between the indoor transceivers 21 and the outdoor transceiver 12. Thus, the communications device 32 relays the communications signal from the outdoor transceiver 12 of the outdoor station 1 to the plurality of indoor stations 2. In this case, the communications signal transmitted from the outdoor station 1 includes information (such as an address) identifying an indoor station 2 as the destination. That is why among the plurality of indoor stations 2, only the indoor station 2, of which the assigned address matches the address included in the communications signal, is qualified to receive the communications signal. The communications device 32 also relays communications signals transmitted from the respective indoor stations 2 to the outdoor station 1.

The signal processing unit 31 is a computer system including one or more processors and a memory as main hardware components. In the computer system, the functions of the signal processing unit 31 may be implemented by making the one or more processors execute a program stored in the memory. The program may be stored in the memory of the computer system in advance, may be provided via telecommunications network, or may be provided via a non-transitory recording medium such as a computer system-readable optical disc, or a hard disk drive storing the program.

The signal processor 31 is configured to control the communications device 32. Specifically, the signal processor 31 controls the communications device 32 to make the communications device 32 transmit, to the plurality of indoor stations 2, the communications signal received from the outdoor station 1 and also transmit, to the outdoor station 1, the communications signals received from the plurality of indoor stations 2.

### (2.5) Setting Response Information

In the present embodiment, the response control unit 7 has a setting function of, when receiving a setting input for setting the pieces of response information, setting, in accordance with the setting input, the pieces of response information with the outdoor station 1 being regarded as one unit or with the multi-family dwelling house (complex facility) 200 being regarded as one unit. As used herein, "setting the pieces of response information" means setting of at least some contents of the pieces of the response information. The pieces of response information may include, for example, character strings or images to be displayed on the monitor screen 180 of the monitor 18, voice messages to be output from the loudspeaker of the speaker unit 19, or procedures for responding to the visitor H1.

In the present embodiment, the response control unit 7 sets, in accordance with the setting input, the pieces of response information with the outdoor station 1 being regarded as one unit. That is, for example, the pieces of response information may be set which are different between an outdoor station 1 which is a common terminal installed in the common area 201 of the multi-family dwelling house 200 and an outdoor station 1 which is a dedicated terminal for residents of the multi-family dwelling house 200 and which is installed in, for example, the back entrance 202 or the parking lot of the multi-family dwelling house 200. Here, to set the pieces of response information, a builder or a caretaker of the outdoor stations 1 may perform setting at the respective outdoor stations 1 which are setting targets or may perform setting, for each of the plurality of outdoor stations 1, at any one outdoor station 1 of the plurality of outdoor stations 1.

For example, the outdoor station 1 which is a common terminal is mainly used by a third party other than residents. Thus, in this outdoor station 1, response information is preferably set such that a character string of, for example, "Welcome" as a greeting to a visitor HI is displayed on the monitor screen 180 of the monitor 18. Moreover, the outdoor station 1 which is a dedicated terminal is mainly used by residents. Thus, in this outdoor station 1, response information is preferably set such that a character string of, for example, "Welcome back" as a greeting to a visitor H1 is displayed on the monitor screen 180 of the monitor 18.

In the present embodiment, the pieces of response information includes first information and second information. That is, when receiving the setting input, the response control unit 7 sets the first information and the second information in accordance with the setting input.

The first information is invariable information independent of a situation which the outdoor station 1 is in. That is, the first information is information independent of the time zone, the attribute of the visitor H1 (e.g., resident, family members, friends of the resident, or business operator such as a deliverer), information input in the outdoor station 1, or the like. For example, the first information is guidance information for prompting a user to enter a room number (e.g., character string of, for example, "Please enter a room number") and a voice message.

The second information is variable information that varies depending on a situation which the outdoor station 1 is in. That is, the second information is information that varies depending on the time zone, the attribute of the visitor H1, information input in the outdoor station 1, or the like. For example, the second information is guidance information representing a greeting to the visitor H1 (e.g., character string of, for example, "Hello") and a voice message. Alternatively, for example, the response control unit 7 may set, in accordance with the setting input, the response information (second information) in a manner as described below. That is, the response control unit 7 displays, for example, in the morning, a character string of, for example, "Good morning" as the response information on the monitor screen 180 of the monitor 18 or outputs a voice message saying, for example, "Good morning" from the loudspeaker of the speaker unit 19. Moreover, the response control unit 7 displays, for example, in the evening, a character string of, for example, "Good evening" as the response information on the monitor screen 180 of the monitor 18 or outputs a voice message saying, for example, "Good evening" from the loudspeaker of the speaker unit 19.

Moreover, the response control unit 7 may set enablement/disablement of a message pre-notification function in accordance with the setting input. In this case, the message pre-notification function is a function of: receiving, from the visitor H1, prescribed information which is the name or the attribute of the visitor H1; and notifying a resident (responding person) of the prescribed information thus received before the resident (responding person) starts speaking with the visitor H1. That is, the pieces of response information may include instruction information for prompting the visitor H1 to input the prescribed information. Then, the response control unit 7 sets, in accordance with the setting input, whether or not the instruction information is included into the pieces of response information.

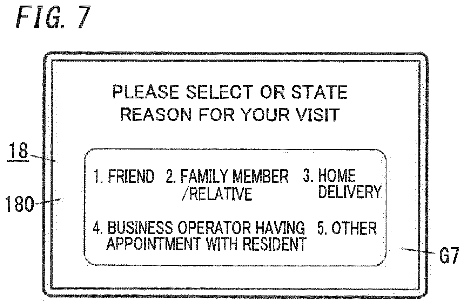

In the present embodiment, the response control unit 7 displays the second guidance image G2 and the third guidance image G3 as the instruction information on the monitor screen 180 of the monitor 18, thereby prompting the visitor H1 to state his/her name. In addition, the response control unit 7 may display, for example, a guidance image as shown in FIG. 7 as the instruction information on the monitor screen 180 of the monitor 18 before displaying the second guidance image G2 and the third guidance image G3.

The guidance image shown in FIG. 7 includes guidance information (e.g., a character string of, for example, "Please select or state the reason for your visit") for prompting the visitor H1 to enter the attribute (including the reason for a visit) of the visitor H1 and pieces of selection information (e.g., character strings of, for example, "1. Friend" and "2. Family member/Relative"). The visitor HI enters his/her attribute selected from the pieces of selection information shown in the guidance image via the outdoor user interface 14, or the visitor H1 states his/her attribute to the microphone of the speaker unit 19. In this way, the response control unit 7 receives attribute information regarding the attribute selected by the visitor H1 and transmits the attribute information thus received to the indoor station 2. The indoor station 2 displays a character string corresponding to the attribute information on the monitor 22 or outputs a voice message corresponding to the attribute information from the loudspeaker of the speaker unit 29, thereby informing the resident (responding person) of the attribute of the visitor H1.

Moreover, the response control unit 7 may set, in accordance with the setting input, a function of changing the response information depending on the attribute of the visitor H1. In other words, the response control unit 7 may change the response information in accordance with the information input to the outdoor station 1. Here, the information input to the outdoor station 1 may include: an image of the visitor H1 captured by the outdoor station 1, information input by an operation given to the outdoor user interface 14, or a voice data of the visitor H1 acquired by the microphone of the speaker unit 19.

The response control unit 7 may compare, for example, the image obtained by imaging the visitor H1 with an image in a visitor list stored in the storage 16 to determine the attribute of the visitor H1. Moreover, the response control unit 7 may compare, for example, the voice data of the visitor H1 with voice data in a visitor list stored in the storage 16 to determine the attribute of the visitor H1. Alternatively, the response control unit 7 may use, for example, the message pre-notification function described above to acquire the attribute information of the visitor H1.

For example, the response control unit 7 may set, in accordance with the setting input, the response information in a manner as described below. That is, if the visitor HI is a business operator such as a deliverer and is known to the resident (e.g., a business operator who has an appointment with the resident), the response control unit 7 displays, on the monitor screen 180 of the monitor 18, a character string for prompting the business operator to enter a passcode set between the resident and the business operator in advance. Moreover, if the visitor H1 is a friend, or the like, who is a person known to the resident, the response control unit 7 displays a character string expressing a welcome on the monitor screen 180 of the monitor 18.

Moreover, the response control unit 7 may set, in accordance with the setting input at the indoor station 2, a function of changing the response information for each of the indoor stations 2. In other words, the response control unit 7 may change the response information in accordance with the information input to any one indoor station 2 of the plurality of indoor station 2. In this case, the information input to the indoor station 2 includes information input by an operation given to the indoor user interface 24 by the resident when the indoor station 2 is not called. For example, the information input to the indoor station 2 may include information regarding a setting of enablement/disablement of an absence mode or information regarding a setting of enablement/disablement of a suspicious individual repulsing mode.

For example, assume that the absence mode is set in an indoor station 2, and the indoor station 2 is designated as a call destination by the visitor H1. In this case, the response control unit 7 displays a character string of, for example, "I am away from home right now" on the monitor screen 180 of the monitor 18, thereby informing the visitor H1 of the absence of the resident. For example, assume that the suspicious individual repulsing mode is set, and the indoor station 2 is designated as a call destination by the visitor H1. In this case, the response control unit 7 refers to, for example, an image obtained by capturing an image of the visitor H1, a voice emitted from the visitor H1 and recorded by the first recording function, or the attribute of the visitor H1 acquired by the message pre-notification function so as to determine whether or not the visitor H1 is a suspicious individual. Then, if the response control unit 7 determines that the visitor H1 is a suspicious individual, the response control unit 7, for example, displays a character string of, for example, "Please get out of here" on the monitor screen 180 of the monitor 18, thereby repulsing the visitor H1.

Moreover, the response control unit 7 may set a call control function in accordance with the setting input. In other words, the response control unit 7 may control an output of call information to the indoor station 2 designated as the call destination by the visitor H1. For example, the response control unit 7 may set, in accordance with the setting input, which control of: alternately repeating outputting of the call sound and regenerating of the first sound data; outputting of only the call sound; or outputting of neither the call sound nor the first sound data is to be performed, while the indoor station 2 is being called. Moreover, for example, the response control unit 7 may set, in accordance with the setting input, whether or not the first sound data recorded by the first recording function and the second sound data recorded by the second recording function are maintained as recorded message data.

Here, the response control unit 7 may set, in accordance with the setting input at the indoor station 2, a call control function for each of the indoor stations 2. In other words, the response control unit 7 may also control, in accordance with the information input to the indoor station 2 designated as the call destination, an output from the call information.

Moreover, the response control unit 7 may also set, in accordance with the setting input, a call control function in a manner as described below. That is, when at least some of the pieces of response information are output and then the information acquired by the outdoor station 1 from the visitor H1 satisfies a prescribed condition, the response control unit 7 controls the output of the call information. For example, the response control unit 7 refers to, for example, an image obtained by capturing an image of the visitor H1, a voice emitted from the visitor H1 and recorded by the first recording function, or the attribute of the visitor H1 acquired by the message pre-notification function so as to determine whether or not the visitor H1 is a person who may be put through to the resident. If the response control unit 7 determines that the visitor H1 is a person who may be put through to the resident, the response control unit 7 starts calling the indoor station 2 designated as the call destination. In contrast, if the response control unit 7 determines that the visitor H1 is a person who should not be put through to the resident, the response control unit 7 does not call the indoor station 2 designated as the call destination.

Moreover, the response control unit 7 may also set, in accordance with the setting input, a call control function in a manner as described below. That is, the response control unit 7 controls the outdoor station 1 when controlling the output of the call information. For example, if the response control unit 7 determines that the visitor H1 is not a person who may be put through to the resident as described above, the response control unit 7, for example, displays a character string of, for example, "Please get out of here" on the monitor screen 180 of the monitor 18, thereby repulsing the visitor H1.

Alternatively, for example, when receiving the setting input, the response control unit 7 may set the aspect of voice information of the pieces of response information in accordance with the setting input. The voice information is to be output as a voice from the outdoor station 1. In the present embodiment, the aspect of the voice information may include languages, voice tones, the tone of words, dialects, or the like. Examples of the languages may include English, Chinese, and Korean in addition to Japanese. Examples of the voice tones include a voice tone imitating the voice tone of a specific individual (e.g., entertainment personality or voice actor/actress) in addition to a male voice tone and a female voice tone. Examples of the tone of words include the tone of words when spoken by butlers in addition to the colloquial tone of words and the literal tone of words.

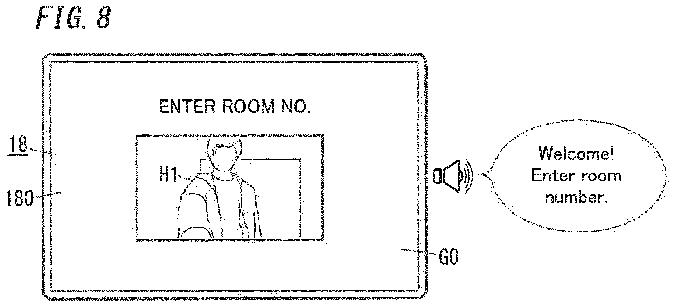

For example, it is assumed that a builder or a caretaker of the outdoor station 1 sets the language of the voice information to English. In this case, the response control unit 7 displays English-language guidance information (e.g., a character string of, for example, "ENTER ROOM No.") for prompting a user to enter a room number in the home guidance image G0 as shown in FIG. 8. Moreover, the response control unit 7 outputs an English-language voice message saying, for example, "Welcome! Enter room number" from the loudspeaker of the speaker unit 19. Thus, when the language of the voice information is set, the response control unit 7 may display character strings in the set language on the monitor screen 180 of the monitor 18. In other words, the response control unit 7 may change, in accordance with the aspect of the set voice information, the aspect of display information to be displayed on the monitor 18 of the outdoor station 1.

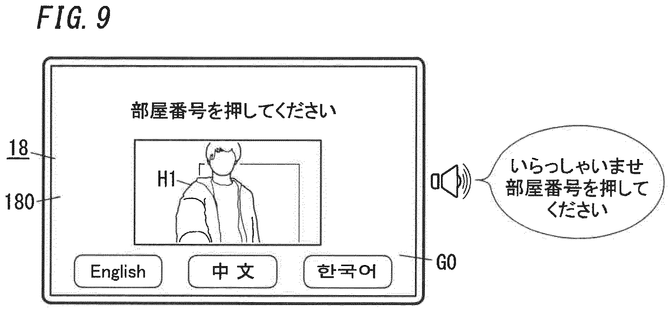

Moreover, the response control unit 7 may set, in accordance with the information input to the outdoor station 1, a function of changing the aspect of the voice information. For example, the response control unit 7 may display a plurality of icons representing respective languages in the home guidance image G0 As shown in FIG. 9. In the home guidance image G0 shown in FIG. 9, an icon including a character string representing the English language, an icon including a character string representing the Chinese language, and an icon including a character string representing the Korean language are displayed. In this case, for example, the visitor H1 touches any one of the icons displayed on the monitor screen 180 of the monitor 18 to select the icon. Hereafter, the response control unit 7 outputs a voice message from the loudspeaker of the speaker unit 19 or displays a character string on the monitor screen 180 of the monitor 18 in the language corresponding to the icon thus selected. Note that the visitor H1 may select any of the icons by giving an operation via the outdoor user interface 14 to a button corresponding to any of the icons displayed on the monitor screen 180 of the monitor 18.

Moreover, the response control unit 7 may set, in accordance with the setting input, enablement/disablement of the first recording function. Further, the response control unit 7 may set, in accordance with the setting input, enablement/disablement of the second recording function.

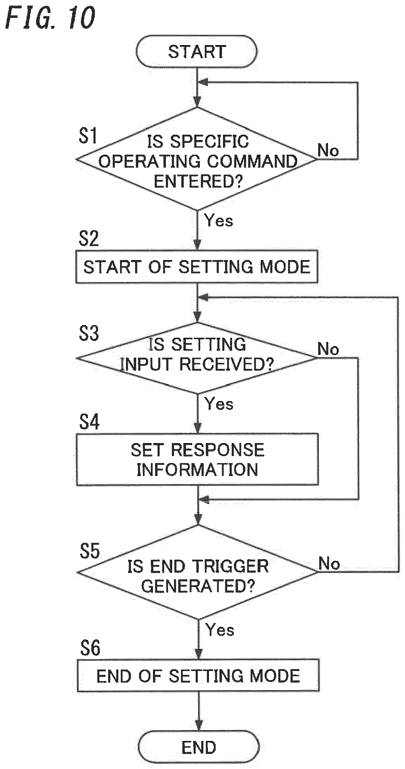

A series of steps of operation of the setting function by the response control unit 7 will be described below with reference to FIG. 10. First of all, for example, a builder or a caretaker enters a specific operating command, which is unknown to residents and which has a high security level, into the outdoor user interface 14 or the like (S1: Yes). Thus, the response control unit 7 starts operating in a setting mode in which the response control unit 7 can receive the setting input (S2).

In the setting mode, the response control unit 7 displays a guidance image for setting on the monitor screen 180 of the monitor 18. The builder or the caretaker performs the setting input with reference to the guidance information displayed in the guidance image for setting. The setting input may be input by the builder or the caretaker by using the outdoor user interface 14 or by a voice emitted from the builder or the caretaker toward the microphone of the speaker unit 19. If the response control unit 7 receives the setting input (S3: Yes), the response control unit 7 sets the response information in accordance with the setting input (S4). The response information set in this step is stored in the storage 16 or the built-in memory of the outdoor controller 13.

Thereafter, the response control unit 7 waits for the setting input until an end trigger is generated (S5: No). Then, if the end trigger is generated (S5: Yes), the response control unit 7 ends the operation in the setting mode (S6). Here, the end trigger is generated by an operating command which is given by the builder or the caretaker to end the setting mode. Moreover, the end trigger is also generated in the case where a time for which no setting input is received continues for a predetermined time or longer.

As described above, in the present embodiment, for example, the builder or the caretaker of the outdoor station 1 may freely set, by the response control unit 7, the pieces of response information with the outdoor station 1 being regarded as one unit and depending on: an environment in which the intercom system 100 is installed, requests by the residents, or the like. Thus, the present embodiment has the advantage that the degree of freedom of the aspect of response to the visitor H1 can be improved.

Moreover, the outdoor controller 13 has a function as the sound volume setting unit 8 for setting the sound volume at which the response information is output. In the present embodiment, the function as the sound volume setting unit 8 is achieved in the setting mode of the response control unit 7 described above. The sound volume setting unit 8 increases or decreases, in accordance with the setting input by, for example, the builder or the caretaker, the sound volume at which the response information is output from the outdoor station 1. Here, the builder or the caretaker may set the sound volume by the sound volume setting unit 8 for each of at least one or more items which are, for example, a prescribed time, a time zone, a date, a month, a day of the week, and seasons. For example, the builder or the caretaker may use the sound volume setting unit 8 to reduce the sound volume to be lower in a time zone from 7 p.m. to 8 a.m. corresponding to the nighttime and the early morning than in other time zones.

### (4) Variation

The embodiment described above is merely an example of various embodiments of the present disclosure. The embodiment described above may be modified in various ways depending on design and the like as long as the object of the present disclosure is achieved. Moreover, functions similar to those of the intercom system 100 may be realized by a setting method, a (computer) program, a non-transitory storage medium storing a program, or the like.

A setting method according to one aspect includes an input step and a setting step. The input step is a step of receiving a setting input for setting pieces of response information. The setting step is a step of, in accordance with the setting input received in the input step, setting the pieces of response information with the complex facility 200 being regarded as one unit. The complex facility 200 includes one or more facilities 20. The pieces of response information are pieces of information which the outdoor station 1 outputs to respond to a visitor H1 who visits the complex facility 200. The outdoor station 1 is an apparatus which is provided to the complex facility 200 and which is configured to communicate with any one of a plurality of indoor stations 2 each of which is provided to a corresponding one of the plurality of facilities 20. A program according to one aspect is configured to cause one or more processors to execute the setting method.

A setting method according to one aspect includes an input step and a setting step. The input step is a step of receiving a setting input for setting pieces of response information. The setting step is a step of, in accordance with the setting input received in the input step, setting an aspect of voice information of the pieces of response information. The voice information is to be output as a voice from an outdoor station 1. The pieces of response information are pieces of information which the outdoor station 1 outputs to respond to a visitor H1 who visits the complex facility 200 including the plurality of facilities 20. The outdoor station 1 is an apparatus which is provided to the complex facility 200 and which is configured to communicate with any one of a plurality of indoor stations 2 each of which is provided to a corresponding one of the plurality of facilities 20. A program according to an aspect causes one or more processors to execute the setting method.

The intercom system 100 in the present disclosure includes computer systems in, for example, the outdoor controller 13 of the outdoor station 1 and the signal processor 31 of the control device 3. Each computer system may include, as principal hardware components, a processor and a memory. The functions of the outdoor controller 13 and the signal processor 31 according to the present disclosure may be performed by making the processor execute a program stored in the memory of the computer system. The program may be stored in advance in the memory of the computer system. Alternatively, the program may also be downloaded through a telecommunications line or distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a largescale integrated circuit (LSI). The integrated circuit such as IC or LSI mentioned herein may be referred to in another way, depending on the degree of the integration and includes integrated circuits called system LSI, very-large-scale integration (VLSI), or ultra-large-scale integration (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips without limitation. The plurality of chips may be collected in one device or may be distributed in a plurality of devices. As mentioned herein, the computer system includes a microcontroller including one or more processors and one or more memories. Thus, the microcontroller is also composed of one or more electronic circuits including a semiconductor integrated circuit or a large-scale integrated circuit.

Also, a plurality of functions of the outdoor station 1 are integrated together in a single housing. However, this is only an example and should not be construed as limiting. Components of the outdoor station 1 may be distributed in multiple different housings. Still alternatively, at least some functions of the outdoor station 1 (such as that of the outdoor controller 13) may be implemented as a server device and a cloud computing system as well. Conversely, all of those functions of the outdoor station 1 may also be integrated together in a single housing as in the embodiment described above. The same applies to the control device 3.

In the embodiment described above, the response control unit 7 is not limited to the aspect implemented as one function of the outdoor controller 13 but may be provided as a member separated from the outdoor controller 13. Moreover, the response control unit 7 may be installed at any location as long as the response control unit 7 can communicate with the outdoor station 1. For example, the response control unit 7 may be installed in the control device 3, or in an indoor station of the caretaker's room in place of the outdoor station 1. The same applies to the sound volume setting unit 8.

In the embodiment described above, the response control unit 7 may set the response information with the multi-family dwelling house (complex facility) 200 being regarded as one unit. For example, when two multi-family dwelling houses 200 are provided, an outdoor station 1 of one multi-family dwelling house 200 may be set to prompt a visitor H1 to enter a room number in responding to the visitor H1, and an outdoor station 1 of the other multi-family dwelling house 200 may be set to prompt the visitor to select the reason for a visit in addition to the entering of the room number.

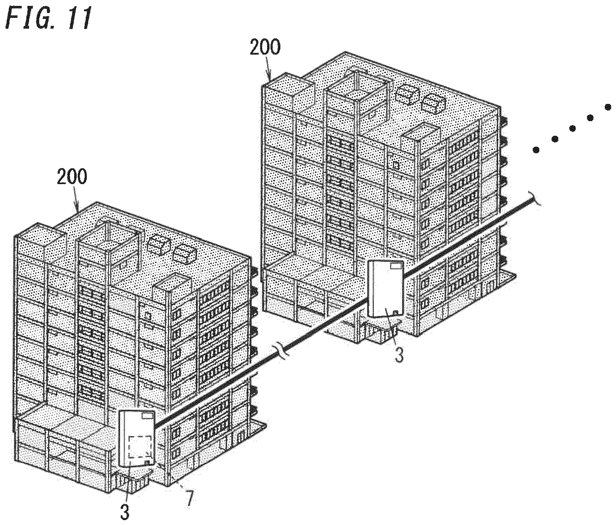

As shown in FIG. 11, the embodiment described above may include a plurality of (in FIG. 11, two) dwelling houses (complex facilities) 200. In this case, when receiving the setting input, the response control unit 7 may set, in accordance with the setting input, pieces of response information with a plurality of multi-family dwelling houses 200 being regarded as one unit. As used herein, "setting the pieces of response information with a plurality of multi-family dwelling houses 200 being regarded as one unit" means that, for example, when outdoor stations 1 are provided to the plurality of multi-family dwelling houses 200 on a one-to-one basis, the same pieces of response information are set in all of the outdoor stations 1. In this case, for example, the response control unit 7 is provided at least any one control device 3 of the plurality of control devices 3 installed in the plurality of multi-family dwelling houses 200 on a one-to-one basis. Then, the response control unit 7 sets the pieces of response information, and then, transmitting the set pieces of response information via the plurality of control devices 3 to all of the outdoor stations 1 enables the same pieces of response information to be set in all the outdoor stations 1.

In the embodiment described above, the response control unit 7 may be configured to set, in accordance with the setting input, enablement/disablement of the function of: synthesizing together sound data and video data recorded while the indoor station 2 is being called and recorded message data to obtain synthesized data; and storing the synthesized data in the indoor station 2.

In the embodiment described above, the response control unit 7 may be configured to set, in accordance with the setting input, enablement/disablement of a function of, while the outdoor station 1 is responding to the visitor H1, informing the resident of the presence of the visitor H1 before the indoor station 2 is called. According to this function, the response control unit 7 causes the indoor station 2 to emit light from a light source such as a Light Emitting Diode (LED) or gradually increase the sound volume of a specific sound from the loudspeaker of the speaker unit 29.

In the embodiment described above, the response control unit 7 may set, in accordance with the setting input, enablement/disablement of a function of automatically answering a call by the visitor H1 without intervention by the resident. According to this function, when the indoor station 2 is set in an absence mode, for example, the response control unit 7 uses a learned neural network to automatically respond to the visitor H1.

In the embodiment described above, the response control unit 7 may perform control such that the outdoor station 1 and the indoor station 2 output different voice messages or different sounds while the outdoor station 1 is responding to the visitor H1.

In the embodiment described above, the response control unit 7 may be configured to receive a setting input from the indoor station installed in a caretaker's room of the multi-family dwelling house 200.

### (Summary)

As described above, an intercom system (100) of a first aspect includes a response control unit (7). The response control unit (7) is configured to control pieces of response information. The pieces of response information are pieces of information which an outdoor station (1) outputs to respond to a visitor (HI) who visits a complex facility (200) including a plurality of facilities (20). The outdoor station (1) is an apparatus which is provided to the complex facility (200) and which is configured to communicate with any one of a plurality of indoor stations (2) each of which is provided to a corresponding one of the plurality of facilities (20). The response control unit (7) is configured to, when receiving a setting input for setting the pieces of response information, set an aspect of voice information of the pieces of response information in accordance with the setting input. The voice information is to be output as a voice from the outdoor station (1).

This configuration has the advantage that the degree of freedom of the aspect of response to the visitor (H1) can be improved.

In an intercom system (100) of a second aspect referring to the first aspect, the response control unit (7) is configured to, in accordance with the aspect of the voice information, change an aspect of display information to be displayed on a monitor (18) included in the outdoor station (1).

This aspect has the advantage that as the aspect of response to the visitor (H1), not only the voice information but also the display information is changeable together.

In an intercom system (100) of a third aspect referring to the first or second aspect, the aspect of the voice information include a language.

This aspect has the advantage that a setting is made such that the visitor (H1) can be responded in a language understandable by the visitor (H1).

In an intercom system (100) of a fourth aspect referring to any one of the first to third aspects, the pieces of response information include first information and second information. The first information is invariable information independent of a situation which the outdoor station (1) is in. The second information is variable information that varies depending on the situation which the outdoor station (1) is in.

This configuration has the advantage that the degree of freedom of the aspect of response to the visitor (H1) can be further improved.

In an intercom system (100) of a fifth aspect referring to any one of the first to fourth aspects, the pieces of response information include instruction information for prompting the visitor (H1) to enter prescribed information.

This aspect has the advantage that information regarding the visitor (H1) can be acquired before any one of the indoor station (2) is called.

In an intercom system (100) of a sixth aspect referring to any one of the first to fifth aspects, the response control unit (7) is configured to change the pieces of response information in accordance with information input to the outdoor station (1).

This aspect has the advantage that the aspect of response to the visitor (H1) is variable in accordance with the visitor (H1).

In an intercom system (100) of a seventh aspect referring to any one of the first to sixth aspects, the response control unit (7) is configured to change the response information in accordance with information input to any one indoor station (2) of the plurality of indoor station (2).

This aspect has the advantage that the aspect of response to the visitor (H1) is variable for each of users of the indoor station (2) (e.g., each of residents of the dwelling unit (20)).

In an intercom system (100) of an eighth aspect referring to any one of the first to seventh aspects, the response control unit (7) is configured to control an output of call information to an indoor station (2), which is designated as a call destination by the visitor (H1), of the plurality of indoor stations (2).

This aspect has the advantage that the degree of freedom of the aspect of calling a user of the indoor station (2) is improved.

In an intercom system (100) of a ninth aspect referring to the eighth aspect, the response control unit (7) is configured to, in accordance with information input to the indoor station (2) designated as the call destination, control the output of the call information.

This aspect has the advantage that the aspect of calling is variable for each of the users of the indoor station (2).

In an intercom system (100) of a tenth aspect referring to the eighth or ninth aspect, the response control unit (7) is configured to, when at least some of the pieces of response information are output and then information acquired by the outdoor station (1) from the visitor (H1) satisfies a prescribed condition, control the output of the call information.

This aspect has the advantage that the aspect of calling is variable depending on the visitor (H1).

In an intercom system (100) of an eleventh aspect referring to any one of the eighth to tenth aspects, the response control unit (7) is configured to control the outdoor station (1) when controlling the output of the call information.

This aspect has the advantage that the aspect of operation of the outdoor station (1) is variable while any one of the indoor stations (2) is being called.

An intercom system (100) of a twelfth aspect referring to any one of the first to eleventh aspects further includes a sound volume setting unit (8) configured to set a sound volume at which the pieces of response information are output.

This aspect has the advantage that setting is performed to enable the pieces of response information be output at an appropriate sound volume depending on an environment which the outdoor station (1) is installed in.

A setting method of a thirteenth aspect includes an input step and a setting step. The input step is a step of receiving a setting input for setting pieces of response information. The setting step is a step of, in accordance with the setting input received in the input step, setting an aspect of voice information of the pieces of response information. The voice information is to be output as a voice from an outdoor station (1). The pieces of response information are pieces of information which the outdoor station (1) outputs to respond to a visitor (H1) who visits a complex facility (200) including a plurality of facilities (20). The outdoor station (1) is an apparatus which is provided to the complex facility (200) and which is configured to communicate with any one of a plurality of indoor stations (2) each of which is provided to a corresponding one of the plurality of facilities (20).

This configuration has the advantage that the degree of freedom of the aspect of response to the visitor (H1) can be improved.

A program according to a fourteenth aspect is configured to cause one or more processors to execute the setting method of the thirteenth aspect.

This configuration has the advantage that the degree of freedom of the aspect of response to the visitor (H1) can be improved.

The configurations of the second to twelfth aspects are not essential configurations for the intercom system (100) and may accordingly be omitted.

Moreover, the intercom system (100) may be configured as described below.

That is, an intercom system (100) of a fifteenth aspect includes a response control unit (7). The response control unit (7) is configured to control pieces of response information. The pieces of response information are pieces of information which an outdoor station (1) outputs to respond to a visitor (H1) who visits a complex facility (200) including a plurality of facilities (20). The outdoor station (1) is an apparatus which is provided to the complex facility (200) and which is configured to communicate with any one of a plurality of indoor stations (2) each of which is provided to a corresponding one of the plurality of facilities (20). The response control unit (7) is configured to, when receiving a setting input for setting a pieces of response information, set the pieces of the response information in accordance with the setting input with the outdoor station (1) being regarded as one unit or with a complex facility (200) being regarded as one unit.

This configuration has the advantage that the degree of freedom of the aspect of response to the visitor (H1) can be improved.

In an intercom system (100) of a sixteenth aspect referring to the fifteenth aspect, the response information includes first information and second information. The first information is invariable information independent of a situation which the outdoor station (1) is in. The second information is variable information that varies depending on the situation which the outdoor station (1) is in.

This configuration has the advantage that the degree of freedom of the aspect of response to the visitor (H1) can be further improved.

In an intercom system (100) of a seventeenth aspect referring to the fifteenth or sixteenth aspect, the response information includes instruction information for prompting the visitor (H1) to enter prescribed information.

This aspect has the advantage that information regarding the visitor (H1) can be acquired before any one of the indoor station (2) is called.

In an intercom system (100) of an eighteenth aspect referring to any one of the fifteenth to seventeenth aspects, the response control unit (7) is configured to change the pieces of response information in accordance with information input to the outdoor station (1).

This aspect has the advantage that the aspect of response to the visitor (H1) is variable in accordance with the visitor (H1).

In an intercom system (100) of a nineteenth aspect referring to any one of the fifteenth to eighteenth aspects, the response control unit (7) is configured to change the response information in accordance with information input to any one indoor station (2) of the plurality of indoor station (2).

This aspect has the advantage that the aspect of response to the visitor (H1) is variable for each of users of the indoor station (2) (e.g., each of residents of the dwelling unit (20)).

In an intercom system (100) of a twentieth aspect referring to any one of the fifteenth to nineteenth aspects, the response control unit (7) is configured to control an output of call information to an indoor station (2), which is designated as a call destination by the visitor (H1), of the plurality of indoor stations (2).

This aspect has the advantage that the degree of freedom of the aspect of calling a user of the indoor station (2) is improved.

In an intercom system (100) of a twenty-first aspect referring to the twentieth aspect, the response control unit (7) is configured to, in accordance with the information input to the indoor station (2) designated as the call destination, control an output of the call information.

This aspect has the advantage that the aspect of calling is variable for each of the users of the indoor station (2).

In an intercom system (100) of a twenty-second aspect referring to the twentieth or twenty-first aspect, the response control unit (7) is configured to, when at least some of the pieces of response information are output and then information acquired by the outdoor station (1) from the visitor (H1) satisfies a prescribed condition, control the output of the call information.

This aspect has the advantage that the aspect of calling is variable depending on the visitor (H1).

In an intercom system (100) of a twenty-third aspect referring to any one of the twentieth to twenty-second aspects, the response control unit (7) is configured to control the outdoor station (1) when controlling the output of the call information.

This aspect has the advantage that the aspect of operation of the outdoor station (1) is variable while any one of the indoor stations (2) is being called.

In an intercom system (100) of a twenty-fourth aspect referring to any one of the fifteenth to twenty-third aspects, a sound volume setting unit (8) configured to set a sound volume at which the pieces of response information are output.

This aspect has the advantage that setting is performed to enable the pieces of response information be output at an appropriate sound volume depending on an environment which the outdoor station (1) is installed in.

In an intercom system (100) of a twenty-fifth aspect referring to any one of the fifteenth to twenty-fourth aspects, the complex facility (200) includes a plurality of complex facilities. The response control unit (7) is configured to, when receiving the setting input, set the pieces of response information in accordance with the setting input with a plurality of complex facilities (200) being regarded as one unit.

This aspect has the advantage that a time and effort for setting the pieces of response information are reduced as compared to the case where the pieces of response information are set for each complex facility (200).

A setting method of a twenty-sixth aspect includes an input step and a setting step. The input step is a step of receiving a setting input for setting pieces of response information. The setting step is a step of, in accordance with the setting input received in the input step, setting response information with the outdoor station (1) being regarded as one unit or with a complex facility (200) being regarded as one unit. The complex facility (200) includes a plurality of facilities (20). The pieces of response information are pieces of information which an outdoor station (1) outputs to respond to a visitor (H1) a complex facility (200). The outdoor station (1) is an apparatus which is provided to the complex facility (200) and which is configured to communicate with any one of a plurality of indoor stations (2) each of which is provided to a corresponding one of the plurality of facilities (20).

This configuration has the advantage that the degree of freedom of the aspect of response to the visitor (H1) can be improved.

A program according to a twenty-seventh aspect is configured to cause one or more processors to execute the setting method of the twenty-sixth aspect.

This configuration has the advantage that the degree of freedom of the aspect of response to the visitor (H1) can be improved.

The configurations of the sixteenth to twenty-fifth aspects are not essential configurations for the intercom system (100) and may accordingly be omitted.

Incidentally, while the responding person(resident) and the visitor H1 are speaking to each other, the responding person may give a specific operation to the indoor station 2 such that the outdoor station 1 outputs a voice message for repulsing the visitor H1 in a superimposed manner on a voice of the responding person. For example, the visitor H1 may be a person whose object (e.g., proselytizing, sales promotion of newspaper, or a sales visit) of visit is unwanted by the responding person. In such a case, the outdoor station 1 may output a voice message saying, for example, "Make the person go home" or "Shall I make a complaint?" for asking the visitor H1 to leave. The aspect of the voice message for asking the visitor H1 to leave is preferably, for example, a male voice tone, or a voice tone or the tone of words with anger against the visitor H1.

That is, the intercom system (100) includes the outdoor station (1) and the response control unit (7). The outdoor station (1) is provided to the complex facility (200) including a plurality of facilities (20) and is configured to communicate with any one of a plurality of indoor stations (2) each of which is provided to a corresponding one of the plurality of facilities (20). The response control unit (7) is configured to control an output of pieces of response information to the outdoor station (1), the pieces of response information being pieces of information for responding to the visitor (H1) who visits the complex facility (200). When the indoor station (2) receives a prescribed input while the visitor and the resident are speaking to each other over the outdoor station (1) and the indoor station (2), the response control unit (7) causes the outdoor station (1) to output voice information for repulsing the visitor (H1) in a superimposed manner on the voice output from the outdoor station (1).

### Reference Signs List

- 1: Outdoor Station
- 18: Monitor
- 2: Indoor Station
- 7: Response control unit
- 8: Sound Volume Setting Unit
- 20: Dwelling Unit (Facility)
- 100: Intercom System
- 200: Multi-Family Dwelling House (Complex Facility)
- HI: Visitor

## Claims

1. An intercom system, comprising
a response control unit configured to control pieces of response information,
the pieces of response information being pieces of information which an outdoor station outputs to respond to a visitor who visits a complex facility including a plurality of facilities,
the outdoor station being an apparatus which is provided to the complex facility and which is configured to communicate with any one of a plurality of indoor stations each of which is provided to a corresponding one of the plurality of facilities,
the response control unit being configured to, when receiving a setting input for setting the pieces of response information, set an aspect of voice information of the pieces of response information in accordance with the setting input, the voice information being to be output as a voice from the outdoor station.

2. The intercom system of claim 1, wherein
the response control unit is configured to, in accordance with the aspect of the voice information, change an aspect of display information to be displayed on a monitor included in the outdoor station.

3. The intercom system of claim 1 or 2, wherein
the aspect of the voice information include a language.

4. The intercom system of any one of claims 1 to 3, wherein
the pieces of response information include
first information being invariable information independent of a situation which the outdoor station is in, and
second information being variable information that varies depending on the situation which the outdoor station is in.

5. The intercom system of any one of claims 1 to 4, wherein
the pieces of response information include instruction information for prompting the visitor to enter prescribed information.

6. The intercom system of any one of claims 1 to 5, wherein
the response control unit is configured to change the pieces of response information in accordance with information input to the outdoor station.

7. The intercom system of any one of claims 1 to 6, wherein
the response control unit is configured to change the response information in accordance with information input to any one indoor station of the plurality of indoor station.

8. The intercom system of any one of claims 1 to 7, wherein
the response control unit is configured to control an output of call information to an indoor station, which is designated as a call destination by the visitor, of the plurality of indoor stations.

9. The intercom system of claim 8, wherein
the response control unit is configured to, in accordance with information input to the indoor station designated as the call destination, control the output of the call information.

10. The intercom system of claim 8 or 9, wherein
the response control unit is configured to, when at least some of the pieces of response information are output and then information acquired by the outdoor station from the visitor satisfies a prescribed condition, control the output of the call information.

11. The intercom system of any one of claims 8 to 10,
the response control unit is configured to control the outdoor station when controlling the output of the call information.

12. The intercom system of any one of claims 1 to 11, further comprising
a sound volume setting unit configured to set a sound volume at which the pieces of response information are output.

13. A setting method, comprising:
an input step of receiving a setting input for setting pieces of response information; and
a setting step of, in accordance with the setting input received in the input step, setting an aspect of voice information of the pieces of response information, the voice information being to be output as a voice from an outdoor station,
the pieces of response information being pieces of information which the outdoor station outputs to respond to a visitor who visits a complex facility including a plurality of facilities,
the outdoor station being an apparatus which is provided to the complex facility and which is configured to communicate with any one of a plurality of indoor stations each of which is provided to a corresponding one of the plurality of facilities.

14. A program configured to cause one or more processors to execute the setting method of claim 13.
